# EUROPÄISCHE PATENTSCHRIFT

(11) **EP 1 577 054 B1**
(45) Veröffentlichungstag und Bekanntmachung des Hinweises auf die Patenterteilung: **14.03.2007**
(21) Anmeldenummer: 05003408.1
(22) Anmeldetag: 17.02.2005
(51) Int. Cl.: B23Q 3/02, B23B 31/107

(54) **Spannzylinder mit Verschlusskappe**
Clamp cylinder with cover cap
Cylindre de serrage avec chapeau de fermeture

(30) Priorität: 16.03.2004 DE 202004004181 U
(43) Veröffentlichungstag der Anmeldung: 21.09.2005
(73) Patentinhaber: Vischer & Bolli AG, 8600 Dübendorf 1 (CH)
(72) Erfinder: Etter, Ernst, 8800 Thalwil (CH)
(74) Vertreter: Paul, Dieter-Alfred

(56) Entgegenhaltungen:
- EP-A- 1 264 657
- DE-U1- 20 003 729

## Beschreibung

Die vorliegende Erfindung betrifft eine Spanneinrichtung zur Fixierung eines Einzugsbolzens an einem Maschinentisch, einer Aufspannplatte oder dergleichen mit einer Aufnahme, in die ein Einzugsbolzen von außen durch eine Einsetzöffnung einsetzbar ist, einem Spannmechanismus, um den Einzugsbolzen in der Aufnahme zu arretieren, und einer verschlußkappe, die innerhalb der Aufnahme zwischen einer Schließstellung, in der die Einsetzöffnung der Aufnahme durch die Verschlußkappe verschlossen ist, und einer Betriebsstellung, bei der die Verschlußkappe durch den in die Aufnahme eingesetzten und mit dem Spannmechanismus arretierten Einzugsbolzen in die Aufnahme hineingedrückt ist, bewegbar ist.

Die Bearbeitung von Werkstücken ist häufig komplex und kann eine Vielzahl von zerspanenden und spanlosen Arbeitsgängen an unterschiedlichen Bearbeitungsmaschinen umfassen, um aus einem Rohling das fertige Bauteil herzustellen. Bei allen Fertigungsabläufen ist dabei wesentlich, daß das Werkstück bei jedem Arbeitsgang eine definierte Lage an der jeweiligen Werkzeugmaschine einnimmt.

Zu diesem Zweck ist es in der Praxis üblich, das zu bearbeitende Werkstück zunächst auf eine Trägerplatte, eine Spannplatte oder dergleichen aufzuspannen und dann die ganze Einheit über mehrere Einzugsbolzen, die an der Rückseite der Trägerplatte angebracht und als Zentrierelemente ausgebildet sind, an der jeweiligen Werkzeugmaschine festzuspannen, indem die Einzugsbolzen in entsprechende Schnellspanneinheiten, die an dem Maschinentisch vorgesehen sind, eingesetzt werden. In der Produktion kann auf diese Weise die Lage der Schnellspanneinrichtungen als fester Maschinenparameter berücksichtigt werden, so daß es lediglich erforderlich ist, jeweils das Werkstück exakt an der Trägerplatte zu positionieren. Das eigentliche Fest- und Umspannen der Einheit aus Werkstück und Trägerplatte an den Maschinen kann dann sehr schnell und unproblematisch erfolgen, ohne daß eine weitere Positionierung notwendig ist.

Bei herkömmlichen Spanneinrichtungen der eingangs genannten Art, wie sie beispielsweise aus DE 200 03 729 U1 bekannt sind, wird der Einzugsbolzen in eine Aufnahme der Spanneinrichtung eingesetzt, die so ausgebildet ist, daß der eingesetzte Einzugsbolzen durch den Kontakt mit der Innenwandung der Aufnahme zentriert wird. Die Fixierung des Einzugsbolzens in der Aufnahme erfolgt mittels Klemmelementen, die als federnde Spannzungen ausgebildet sind.

Weiterhin ist aus der EP 1 264 657 A1 bekannt, eine Aufnahme einer Spanneinrichtung so abzudichten, daß Schmutzpartikel auch dann nicht in sie eindringen können, wenn der Einzugsbolzen entfernt ist. Dazu ist eine plattenförmige Verschlußkappe in die Aufnahme eingesetzt und kann durch einen Schließkolben zwischen zwei Endpositionen bewegt werden. In ihrer ausgefahrenen Endposition, in welcher ihre zur Außenseite der Spanneinrichtung weisende Stirnfläche bündig mit der Oberfläche der Spanneinrichtung abschließt, ist die Aufnahme vor Verschmutzung geschützt. In ihrer eingefahrenen Endposition kann der Einzugsbolzen in die Aufnahme eingesetzt werden.

Bei den bekannten Spanneinrichtungen wird es zum Teil als nachteilig angesehen, daß der Einzugsbolzen paßgenau in die Aufnahme, eingesetzt werden muß.

Aufgabe der vorliegenden Erfindung ist es daher, eine Spanneinrichtung der eingangs genannten Art so auszugestalten, daß der Einzugsbolzen einfach in die Öffnung eingesetzt werden kann und dabei zentriert wird.

Diese Aufgabe ist erfindungsgemäß dadurch gelöst, daß an der zur Außenseite der Spanneinrichtung weisenden Stirnfläche der Verschlußkappe und/oder an der zur Innenseite der Spanneinrichtung weisenden Stirnfläche des Einzugsbolzens eine Zentrierfläche ausgebildet ist, um den Einzugsbolzen vorzuzentrieren, wenn dieser in der Aufnahme eingesetzt wird und dabei seine Stirnfläche mit der Stirnfläche der verschlußkappe in Kontakt kommt.

Der Erfindung liegt damit die Überlegung zugrunde, den Einzugsbolzen beim Einbringen in die Aufnahme automatisch über die in Kontakt kommenden Stirnflächen von Einzugsbolzen und Verschlußkappe vorzuzentrieren, so daß kleinere Versetzungen zwischen dem Einzugsbolzen und der Aufnahme korrigiert werden. So können auch schwere Werkstükke einfach und schnell an der Werkzeugmaschine festgespannt werden.

In vorteilhafter Weise kann es vorgesehen sein, daß die miteinander in Kontakt kommenden Stirnflächen von Einzugsbolzen und Verschlußkappe als zwei korrespondierende Zentrierflächen ausgebildet sind. Hierbei ist es besonders günstig, die Stirnfläche der Verschlußkappe kuppelartig und die Stirnfläche des Einzugsbolzens komplementär zu dieser kuppelartigen Stirnfläche auszubilden. Derartig beschaffene Stirnflächen erzielen eine gute zentrierende Wirkung und sind einfach in ihrer Herstellung.

Bei einer Ausführungsform der Erfindung ist weiterhin vorgesehen, daß die Verschlußkappe durch eine Feder oder durch einen Hydraulikkolben in die Schließstellung gedrückt wird. Beide Ausführungen gewährleisten eine einfache Betätigung und sind robust.

Zweckmäßigerweise kann die Verschlußkappe an ihrem unteren Ende einen Anschlag aufweisen, der verhindert, daß die Verschlußkappe über die Schließstellung hinaus aus der Spanneinrichtung gedrückt wird.

Bei der erfindungsgemäßen Spanneinrichtung sind verschiedene Spannmechanismen denkbar. So kann in oben beschriebener bekannter Weise der Spannmechanismus mehrere federnde Spannzungen aufweisen, die zwischen einer radial inneren Spannstellung, in der sie mit dem in der Aufnahme eingesetzten Einzugsbolzen in Eingriff kommen, und einer radial äußeren Freigabestellung unter elastischer verformung bewegbar sind, wobei sie in Richtung der Spannstellung vorgespannt sind. In an sich bekannter Weise kann der Spannungsmechanismus mit einem axial zwischen einer Arretierungsstellung und einer Freigabestellung verschiebbaren Arretierungskolben vorgesehen sein, der durch wenigstens eine Druckfeder in die Arretierungsstellung gedrückt wird und dabei derart in Kontakt mit den Spannzungen kommt, daß die Spannzungen in der radial inneren Spannstellung arretiert werden. Dies gewährleistet eine sichere Arretierung der Spannzungen, so daß sich der Einzugsbolzen während des Betriebs nicht aus der Spanneinrichtung löst, was zu Sachschäden oder zu Verletzungen des Benutzers führen könnte. Durch Beaufschlagung eines Druckraums des Arretierungskolbens kann dieser in seine Freigabestellung angehoben werden, wobei er außer Kontakt mit den Spannzungen kommt. Der Einzugsbolzen kann nun aus der Aufnahme entfernt werden, wobei die Spannzungen in ihre Freigabestellung aufgespreizt werden.

Bei dieser Ausführungsform der Erfindung kann die Verschlußkappe wenigstens eine Ausnehmung oder Vertiefung - beispielsweise in Form einer Ringnut - in einer Seitenwandung aufweisen, in die mindestens eine Spannzunge eingreift, wenn sich die Verschlußkappe in der Schließstellung befindet, um die verschlußkappe zu fixieren. Wenn sich der Arretierungskolben in der Arretierungsstellung befindet, werden die Spannzungen in der Spannstellung und damit auch die Verschlußkappe in der Schließstellung arretiert, so daß sie die Aufnahme gegen Verschmutzung schützen kann.

Hinsichtlich weiterer vorteilhafter Ausgestaltungen der Erfindungen wird auf die nachfolgende Erläuterung eines Ausführungsbeispiels unter Bezugnahme auf die beiliegende Zeichnung verwiesen. In der Zeichnung zeigt
- Figur 1: im Längsschnitt eine Ausführungsform einer erfindungsgemäßen Spanneinrichtung und
- Figur 2: im Längsschnitt dieselbe Ausführungsform wie in der Figur 1 mit eingesetztem und festgespanntem Einzugsbolzen.

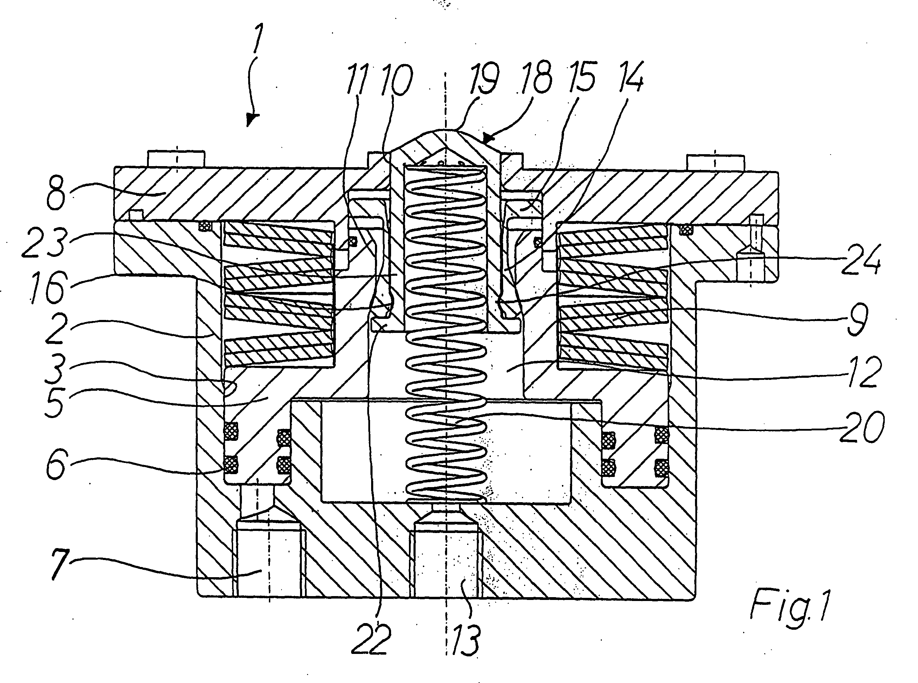

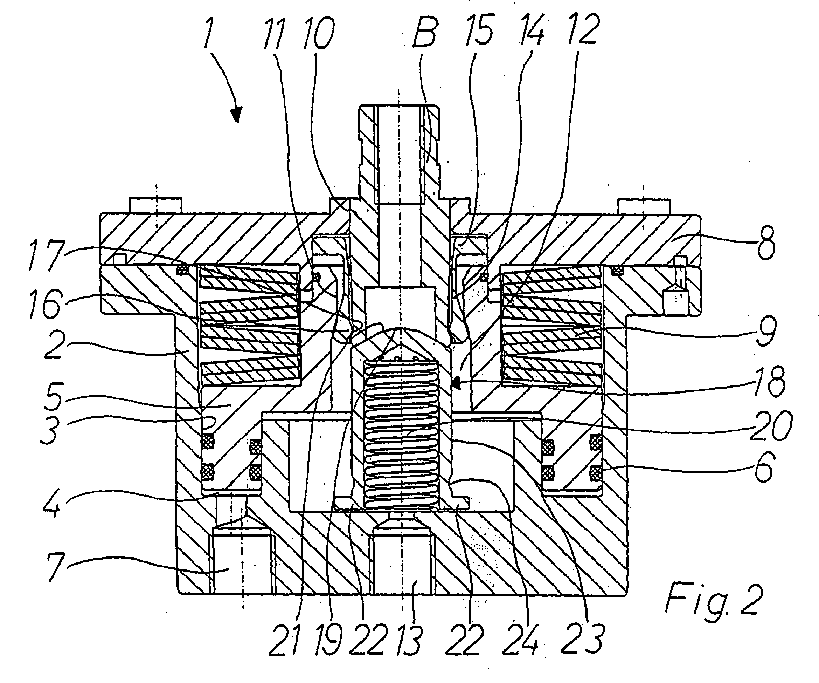

In den Figuren 1 und 2 ist eine Ausführungsform einer erfindungsgemäßen Spanneinrichtung 1 dargestellt, die dazu dient, einen Einzugsbolzen B an einem Maschinentisch oder dergleichen zu fixieren. Zu der Spanneinrichtung 1 gehört ein als Zylinder ausgebildetes Gehäuse 2, das an dem Maschinentisch oder dergleichen befestigt werden kann. In die zur Gehäuseoberseite offene Zylinderbohrung 3 des Gehäuses 2 ist unter Bildung eines Druckraums 4 ein Arretierungskolben 5 axial zwischen einer Arretierungsstellung und einer Freigabestellung bewegbar eingesetzt, wobei ein Ringspalt zwischen zylinderbohrung 3 und Arretierungskolben 5 durch O-Ringe 6 abgedichtet ist. In den Boden der Zylinderbohrung 3 mündet ein im Gehäuse 2 ausgebildeter Kanal 7, durch welchen dem Druckraum 4 ein Hydraulikmittel wie beispielsweise Öl zugeführt werden kann.

Die offene Oberseite des Gehäuses 2 ist durch einen Dekkel 8 verschlossen, der an dem Gehäuse 2 befestigt ist. Zwischen dem Deckel 8 und dem Arretierungskolben 5 sind Druckfedern 9 angeordnet, welche sich zwischen dem Deckel 8 und dem Arretierungskolben 5 abstützen und den Arretierungskolben 5 vom Deckel 8 wegdrücken.

In dem Deckel 8 und dem Arretierungskolben 5 sind zentrale Durchgangsöffnungen 10, 11 ausgebildet, welche eine Aufnahme 12 für einen zu spannenden Einzugsbolzen B bilden. In den Boden der Aufnahme 12 für den Einzugsbolzen B mündet ein im Gehäuse ausgebildeter Kanal 13, durch welchen Preßluft in die Aufnahme 12 strömen kann, um die Aufnahme 12 zu säubern.

Zum Fixieren des Einzugsbolzens B ist in der Aufnahme 12 ein Spannmechanismus vorgesehen, zu dem mehrere entlang des Umfangs der Aufnahme 12 angeordnete zungenartige Spannelemente 14, die sogenannten Spannzungen 14, gehören, deren obere Enden an einem an dem Deckel 8 befestigten Ringelement 15 gehalten sind. Die Spannzungen 14 können elastisch aus einer radial inneren Spannstellung, in die sie vorgespannt sind, in eine äußere Freigabestellung aufgespreizt werden. Im Bereich ihrer freien, unteren Enden weisen die Spannzungen 14 jeweils eine Eingriffsnase 16 auf. Diese stehen, wenn sich die Spannzungen 14 sich in ihrer Spannstellung befinden, in Eingriff mit einer Ringnut 17 des in die Spanneinrichtung 1 eingesetzten Einzugsbolzen B, um diesen in der Aufnahme 12 zu fixieren.

Durch die Druckfedern 9 wird der Arretierungskolben 5 in seine Arretierungsstellung gedrückt und kommt dabei so in Kontakt mit den Spannzungen 14, daß er ein Aufspreizen der Spannzungen 14 aus ihrer Spannstellung in die Freigabestellung verhindert. Wenn der Arretierungskolben 5 durch eine Beaufschlagung des Druckraums 4 aus der Arretierungsstellung in die Freigabestellung angehoben wird, kommt er außer Kontakt mit den Spannzungen 14, so daß diese radial nach außen in ihre Freigabestellung aufgespreizt werden können und der Einzugsbolzen B aus der Aufnahme 12 entfernt werden kann.

In die Aufnahme der Spanneinrichtung 1 ist eine Verschlußkappe 18 eingesetzt, mit der die Aufnahme 12 verschlossen werden kann, um sie vor Verschmutzungen zu schützen. Die Verschlußkappe 18 besteht im wesentlichen aus einer Hülse die an ihrem oberen Ende geschlossen ist. Die Verschlußkappe 18 ist in der Aufnahme 12 zwischen einer Schließstellung und einer Betriebsstellung verschiebbar. In ihrer Schließstellung ist die verschlußkappe 18 im oberen Teil der Aufnahme 12 so positioniert, daß sie diese verschließt und dabei ihre nach außen weisende, obere Stirnfläche 19 mit der Oberfläche der Spanneinrichtung 1 bündig abschließt. In der Betriebsstellung ist die Verschlußkappe 18 so weit in die Aufnahme 12 eingeschoben, daß ein Einzugsbolzen in der Aufnahme 12 arretiert werden kann. Die Verschlußkappe 18 wird durch eine Feder 20 von der Betriebsstellung in die Schließstellung gedrückt, welche in die zentrale Bohrung der Verschlußkappe 18 eingesetzt und sich zwischen dem geschlossenen oberen Ende der Verschlußkappe 18 und dem Boden der Aufnahme 12 abstützt.

Die obere Stirnfläche 19 der Verschlußkappe 18 ist als kuppelartige zentrierfläche ausgebildet, um den Einzugsbolzen B beim Einsetzen in die Aufnahme vorzuzentrieren. In korrespondierender Weise ist eine Stirnfläche 21 des Einzugsbolzens B, die mit der Stirnfläche 19 der Verschlußkappe 18 beim Einsetzen in die Aufnahme 12 in Kontakt kommt, komplementär zu dieser kuppelartigen Stirnfläche 19 geformt.

Am unteren Ende der Verschlußkappe 18 ist ein flanschartiger Anschlag 22 vorgesehen, der in der Schließstellung in Kontakt mit der Unterseite der Spannzungen 14 steht und so verhindert, daß die Verschlußkappe 18 über die Schließstellung hinaus aus der Spanneinrichtung 1 gedrückt wird.

Zum Arretieren der Verschlußkappe 18 in ihrer Schließstellung ist in einer Seitenwandung 23 von ihr eine Ringnut 24 ausgebildet, mit der die Spannzungen 14 in Eingriff stehen, wobei sie durch den Arretierungskolben 5 in ihre Spannstellung fixiert sind. Durch ein Anheben des Arretierungskolbens 5 in seine Freigabestellung kann diese Arretierung wieder gelöst werden.

Die Figur 1 zeigt die Spanneinrichtung 1 in ihrer Ausgangsstellung, in welcher sich die verschlußkappe 18 in ihrer oberen Schließstellung befindet. Um ein an einem zu spannendem Bauteil fixierten Einzugsbolzen B in die Aufnahme 12 einzusetzen, wird dieser zunächst in Kontakt mit der Stirnfläche 19 der Verschlußkappe 18 gebracht. Da die beiden Stirnflächen 19, 21 von dem Einzugsbolzen B und der Verschlußkappe 18 als zusammenwirkende Zentrierflächen ausgebildet sind, wird der Einzugsbolzen B beim Kontakt mit der Verschlußkappe 18 automatisch vorzentriert und parallel zur Aufnahme 12 ausgerichtet.

Dann wird der Druckraum 4 des Arretierungskolbens 5 mit einem Druckmedium beaufschlagt, so daß der Arretierungskolben 5 gegen die Federkraft der Druckfeder 9 in seine Freigabestellung angehoben wird und der Einzugsbolzen B in die Aufnahme 12 eingesetzt werden kann, wobei die Spannzungen 14 aus ihrer Spannstellung in die Freigabestellung aufgespreizt werden. Der Einzugsbolzen B wird dabei so weit in die Aufnahme 12 hineingedrückt, bis das an dem Einzugsbolzen B befestigte Bauteil auf der Spanneinrichtung 1 aufsetzt, wobei die Verschlußkappe 18 in ihre Betriebsstellung nach unten gedrückt wird. Dabei kommen die in Spannstellung vorgespannten Spannzungen 14 in Eingriff mit der Ringnut 17 des Einzugsbolzens B.

Schließlich wird die Beaufschlagung des Druckraums 4 mit dem Druckmedium aufgehoben, so daß die Druckfedern 9 den Arretierungskolben 5 in seine Arretierungsstellung drükken, wodurch die Spannzungen 14 in ihrer Spannstellung fixiert werden und der in Figur 2 dargestellte Zustand der Spanneinrichtung 1 erreicht ist.

In umgekehrter Reihenfolge wird die Arretierung der Spannzungen 14 gelöst indem der Druckraum 4 mit Druckmedium beaufschlagt und so der Arretierungskolben 5 in seine Freigabestellung gedrückt wird, um den Einzugsbolzen B aus der Aufnahme 12 zu entfernen. Bei der Entnahme des Einzugsbolzens B wird die Verschlußkappe 18 durch die Feder 20 nach oben in ihre Schließstellung gedrückt, in der die Eingriffsnasen 16 der Spannzungen 14 mit der Ringnut 24 der Verschlußkappe 18 in Eingriff kommen und so ihre Spannstellung erreichen. Schließlich werden die Spannzungen 14 in ihrer Spannstellung arretiert und damit auch die verschlußkappe 18 in ihrer Schließstellung fixiert, wie es in Figur 1 dargestellt ist, indem die Beaufschlagung des Druckraums 4 aufgehoben wird, so daß der Arretierungskolben 5 durch die Druckfedern 9 wieder in seine Arretierungsstellung gebracht wird.

Die erfindungsgemäße Ausführungsform der Spanneinrichtung 1 bietet also gegenüber herkömmlichen Ausführungsformen den Vorteil, daß der Einzugsbolzen B einfacher und schneller in die Aufnahme 12 der Spanneinrichtung 1 eingesetzt werden kann.

## Patentansprüche

1. Spanneinrichtung (1) zur Fixierung eines Einzugsbolzens (B) an einem Maschinentisch, einer Aufspannplatte oder dergleichen mit einer Aufnahme (12), in die ein Einzugsbolzen (B) von außen durch eine Einsetzöffnung einsetzbar ist, einem Spannmechanismus, um den Einzugsbolzen (B) in der Aufnahme (12) zu arretieren, und einer Verschlußkappe (18), die innerhalb der Aufnahme (12) zwischen einer Schließstellung, in der die Einsetzöffnung der Aufnahme (12) durch die Verschlußkappe (18) verschlossen ist, und einer Betriebsstellung, bei der die Verschlußkappe (18) durch den in die Aufnahme (12) eingesetzten und mit dem Spannmechanismus arretierten Einzugsbolzen (B) in die Aufnahme (12) hineingedrückt ist, bewegbar ist, **dadurch gekennzeichnet, daß** an der zur Au-ßenseite der Spanneinrichtung (1) weisenden Stirnfläche (19) der Verschlußkappe (18) und/oder an der zur Innenseite der Spanneinrichtung (1) weisenden Stirnfläche (21) des Einzugsbolzens (B) eine Zentrierfläche ausgebildet ist, um den Einzugsbolzen (B) vorzuzentrieren, wenn dieser in die Aufnahme (12) eingesetzt wird und dabei seine Stirnfläche (21) mit der Stirnfläche (19) der Verschlußkappe (18) in Kontakt kommt.

2. Spanneinrichtung (1) nach Anspruch 1, **dadurch gekennzeichnet, daß** die miteinander in Kontakt kommenden Stirnflächen (21, 19) von dem Einzugsbolzen (B) und der Verschlußkappe (18) als zueinander korrespondierende Zentrierflächen ausgebildet sind.

3. Spanneinrichtung (1) nach Anspruch 2, **dadurch gekennzeichnet, daß** die Stirnfläche (19) der Verschlußkappe (18) kuppelartig und die Stirnfläche (21) des Einzugsbolzens (B) komplementär dazu ausgebildet ist.

4. Spanneinrichtung (1) nach einem der Ansprüche 1 bis 3, **dadurch gekennzeichnet, daß** die Verschlußkappe (18) durch eine Feder (20) in die Schließstellung gedrückt wird.

5. Spanneinrichtung (1) nach einem der Ansprüche 1 bis 3, **dadurch gekennzeichnet, daß** die Verschlußkappe (18) durch einen Hydraulikkolben bewegbar ist.

6. Spanneinrichtung (1) nach einem der Ansprüche 1 bis 5, **dadurch gekennzeichnet, daß** die Verschlußkappe (18) an ihrem der Stirnfläche (19) gegenüberliegenden unteren Ende mindestens einen Anschlag (22) aufweist, der verhindert, daß die Verschlußkappe (18) über die Schließstellung hinaus aus der Spanneinrichtung (1) gedrückt wird.

7. Spanneinrichtung (1) nach einem der Ansprüche 1 bis 6, **dadurch gekennzeichnet, daß** der Spannmechanismus mehrere federnde Spannzungen (14) aufweist, die zwischen einer radial inneren Spannstellung, in der sie mit dem in die Aufnahme (12) eingesetzten Einzugsbolzen (B) in Eingriff kommen, und einer radial äu-ßeren Freigabestellung unter elastischer Verformung bewegbar sind, wobei sie in Richtung der Spannstellung vorgespannt sind.

8. Spanneinrichtung (1) nach Anspruch 7, **dadurch gekennzeichnet, daß** ein axial zwischen einer Arretierungsstellung und einer Freigabestellung verschiebbarer Arretierungskolben (5) vorgesehen ist, der durch wenigstens eine Druckfeder (9) in die Arretierungsstellung gedrückt wird und dabei derart in Kontakt mit den Spannzungen (14) kommt, daß die Spannzungen (14) in der radial inneren Spannstellung arretiert werden.

9. Spanneinrichtung (1) nach einem der Ansprüche 7 oder 8, **dadurch gekennzeichnet, daß** die Verschlußkappe (18) wenigstens eine Ausnehmung (24) oder Vertiefung (24) in einer Seitenwandung (23) aufweist, in die mindestens eine Spannzunge (14) eingreift, wenn sich die Verschlußkappe (18) in der Schließstellung befindet, um so die Verschlußkappe (18) zu fixieren.

## Claims

1. A clamping device (1) for fixing a draw-in bolt (B) to a bench, a clamping plate or similar, with a receptacle (12) into which a draw-in bolt (B) can be inserted from the outside through an insertion opening, a clamping mechanism for locking the draw-in bolt (B) in the receptacle (12), and a locking cap (18) which is movable within the receptacle (12) between a closure position, in which the insertion opening of the receptacle (12) is closed by the locking cap (18), and an operational position, in which the locking cap (18) is pressed into the receptacle (12) by the draw-in bolt (B) inserted into the receptacle (12) and locked with the clamping mechanism, **characterised in that** on the face surface (19) of the locking cap (18) facing towards the outer side of the clamping device (1) and/or on the face surface (21) of the draw-in bolt (B) facing towards the inner side of the clamping device (1) a centring surface is formed in order to pre-centre the draw-in bolt (B) when the latter is inserted in the receptacle (12) and its face surface (21) thus comes into contact with the face surface (19) of the locking cap (18).

2. The clamping device (1) according to Claim 1, **characterised in that** the face surfaces (21, 19) of the draw-in bolt (B) and the locking cap (18) coming into contact with one another are designed as centring surfaces corresponding to one another.

3. The clamping device (1) according to Claim 2, **characterised in that** the face surface (19) of the locking cap (18) is designed in the form of a dome, and the face surface (21) of the draw-in bolt (B) is designed to complement this.

4. The clamping device (1) according to any of Claims 1 to 3, **characterised in that** the locking cap (18) is pressed into the closure position by a spring (20).

5. The clamping device (1) according to any of Claims 1 to 3, **characterised in that** the locking cap (18) can be moved by a hydraulic piston.

6. The clamping device (1) according to any of Claims 1 to 5, **characterised in that** at its lower end lying opposite the face surface (19), the locking cap (18) has at least one stop (22) which prevents the locking cap (18) from being pressed beyond the closure position and out of the clamping device (1).

7. The clamping device (1) according to any of Claims 1 to 6, **characterised in that** the clamping mechanism has several resilient clamping tongues (14) which are movable between a radially inner clamping position in which they engage with the draw-in bolt (B) inserted in the receptacle (12), and a radially outer release position with elastic deformation, being pre-stressed in the direction of the clamping position.

8. The clamping device (1) according to Claim 7, **characterised in that** a locking piston (5), movable axially between a locking position and a release position, is provided which is pressed into the locking position by at least one compression spring (9), and thus comes into contact with the clamping tongues (14) such that the clamping tongues (14) are locked in the radially inner clamping position.

9. The clamping device (1) according to either of Claims 7 or 8, **characterised in that** the locking cap (18) has at least one recess (24) or indentation (24) in a side wall (23) into which the at least one clamping tongue (14) engages when the locking cap (18) is in the closure position so as to thus fix the locking cap (18) in position.

## Revendications

1. Dispositif de fixation (1) pour la fixation d'un boulon rétractable (B) sur la table d'ouvrage d'une machine, sur une plaque de fixation ou autre chose pareille, ayant un espace de réception (12), où l'on peut introduire de l'extérieur par un orifice d'insertion un boulon rétractable (B), un mécanisme de serrage, pour bloquer le boulon rétractable (B) dans l'espace de réception (12) et un couvercle de fermeture (18), qui peut être déplacé dans l'intérieur de l'espace de réception (12) entre une position de fermeture, où l'orifice d'insertion de l'espace de réception (12) est fermé par l'intermédiaire du couvercle de fermeture (18), et une position de travail, où le couvercle de fermeture (18) est poussé dans l'espace de réception (12) par le boulon rétractable (B) introduit dans l'espace de réception (12) et bloqué à l'aide du mécanisme de serrage, **caractérisé en ce que**, sur la face frontale (19) du couvercle de fermeture (18), orientée vers la surface extérieure du dispositif de fixation (1), et/ou sur la face frontale (21) du boulon rétractable (B), orientée vers la partie intérieure du dispositif de fixation (1), est formée une surface de centrage, avec le but de produire un centrage préalable du boulon rétractable (B), alors quand celui est introduit dans l'espace de réception (12) et quand sa face frontale (12) vient en contact avec la face frontale (19) du couvercle de fermeture (18).

2. Dispositif de fixation (1) selon la revendication 1, **caractérisé en ce que**, les faces frontales (21, 19) du boulon rétractable (B) et du couvercle de fermeture (18), qui viennent en contact l'une avec l'autre, sont formées comme des surfaces de centrage correspondant réciproquement.

3. Dispositif de fixation (1) selon la revendication 2, **caractérisé en ce que**, la face frontale (19) du couvercle de fermeture (18) est formée en forme de coupole, et la face frontale (21) du boulon rétractable (B), complémentaire à celle-ci.

4. Dispositif de fixation (1) selon l'une des revendications 1 à 3, **caractérisé en ce que**, le couvercle de fermeture (18) est poussé dans la position de fermeture par un ressort (20).

5. Dispositif de fixation (1) selon l'une des revendications 1 à 3, **caractérisé en ce que**, le couvercle de fermeture (18) est déplacé à l'aide d'un piston hydraulique.

6. Dispositif de fixation (1) selon l'une des revendications 1 à 5, **caractérisé en ce que**, le couvercle de fermeture (18) présente à son extrémité inférieure opposée à la face frontale (19) au moins un arrêt (22), qui empêche que le couvercle de fermeture (18) soit poussé au-delà de la position de fermeture du dispositif de fixation (1).

7. Dispositif de fixation (1) selon l'une des revendications 1 à 6, **caractérisé en ce que**, le mécanisme de serrage présente plusieurs langues de serrage (14) élastiques, qui peuvent se déplacer par déformation élastique entre une position radiale intérieure de serrage, où s'engage avec le boulon rétractable (B) introduit dans l'espace de réception (12), et une position radiale extérieure de libération, étant précontrainte dans la direction de la position de serrage.

8. Dispositif de fixation (1) selon la revendication 7, **caractérisé en ce qu'**on pourvoit un piston de blocage (5) qui peut se déplacer en direction axiale entre une position de blocage et une position de libération, qui est poussé dans la position de blocage par au moins un ressort comprimé (9) et vient par cela en contact avec les langues de serrage (14) de sorte que les langues de serrage (14) soient bloquées dans la position radiale intérieure de serrage.

9. Dispositif de fixation (1) selon l'une des revendications 7 ou 8, **caractérisé en ce que**, le couvercle de fermeture (18) présente au moins une cavité (24) ou dégagement (24) dans une paroi latérale (23), où s'engage au moins une langue de serrage (14), alors quand le couvercle de fermeture (18) se trouve dans la position de fermeture, pour fixer ainsi le couvercle de fermeture (18).
